# EUROPEAN PATENT APPLICATION

(11) **EP 2 554 342 A1**
(43) Date of publication of application: **06.02.2013**
(21) Application number: 12178185.0
(22) Date of filing: 27.07.2012
(51) Int. Cl.: B26D 1/143, B27B 19/00, B26D 7/26

(54) **Cutting means for panels**

(30) Priority: 05.08.2011 IT MO20110204
(71) Applicant: SCM Group S.p.A., 47900 Rimini (IT)
(72) Inventor: Maioli, Fabio, 47822 Santarcangelo di Romagna (RN) (IT)
(74) Representative: Villanova, Massimo

(57) **Abstract**

Cutting means is disclosed for cutting a panel made of wood, or of a material that is similar to wood, in which a circular tool (7) has two blades (13; 14) of different diameters arranged adjacently to one another. The tool is mounted on a disc (6) rotated by a flexible member (12) arranged in an annular cavity (8) obtained on a side of the disc.

## Description

### Background of the invention

The invention relates to cutting means, which is in particular suitable for cutting panels, for example for cutting a panel of large dimensions with one or more cuts to obtain a plurality of smaller panels.

Specifically, but not exclusively, the invention can be advantageously applied in machining workpieces made of wood or of a material that is similar to wood, for example as part of an apparatus for cutting a panel of large dimensions into panels of smaller sizes.

### Summary of the invention

One object of the invention is to provide cutting means that is able to cut a panel.

One advantage is to provide cutting means that makes a precise and correct cut of panels made of wood, or of a material that is similar to wood, without leaving splinters on the cut edge.

One advantage is to make available cutting means, of the circular saw for wood or similar materials type, that is constructionally simple and cheap.

One advantage is to make cutting means that is suitable for first making an incision line on a panel and then a through cut at the incision line.

One advantage is to provide cutting means that is able to machine an edge of a panel by removing material to reduce the dimension of the panel in a normal direction to the machined edge.

One advantage is to provide cutting means with a rotating circular tool mounted on a hub in which the hub can traverse an opening obtained on a panel by a passing cut performed by the tool.

These objects and advantages, and still others, are achieved by the cutting means according to one or more of the claims set out below.

In a specific example, the cutting means comprises a circular tool that may have, for example, two blades of different diameters arranged adjacently to one another. The tool can be mounted on a disc rotated by a motion transmission system, which may comprise, for example, a flexible member or a pair of gears, arranged in an annular cavity obtained on a side of the disc.

### Brief description of the drawings

The invention can be better understood and implemented with reference to the attached drawings that illustrate an embodiment thereof by way of non-limiting example.

Figure 1 is a diagram of a machining step for cutting a panel.

Figure 2 shows, in a top view, the diagram of the machining step in figure 1.

Figures 3A to 3E show, in a vertical elevation, five operating steps in sequence of a method example performed according to the invention.

Figures 4A to 4F show, in a top view, six operating steps in sequence of the method example shown in figures 3A to 3E.

Figures 5A and 5B show, in a side view, two operating steps of the aforesaid method example.

Figure 6 is a partial and schematic section, in a vertical elevation, of cutting means having a tool that is usable in the method of the preceding figures.

### Detailed description

With reference to the aforesaid figures, with 1 there has been generally indicated an apparatus for machining workpieces to be machined made, in particular, of wood or of a material that is similar to wood. The workpiece will, in particular, be a panel or a pack of panels stacked on top of one another. In the figures the workpiece (panel or pack of panels) has been generally indicated by 2 and hereinafter in the description it will be called "panel" for the sake of simplicity.

The machining apparatus 1 will, in this specific case, be an apparatus for cutting the panel 2 into various panels of a smaller size. In general, both the initial larger panel 2 and the smaller panels obtained by cutting may be of rectangular or at least prevalently rectangular shape.

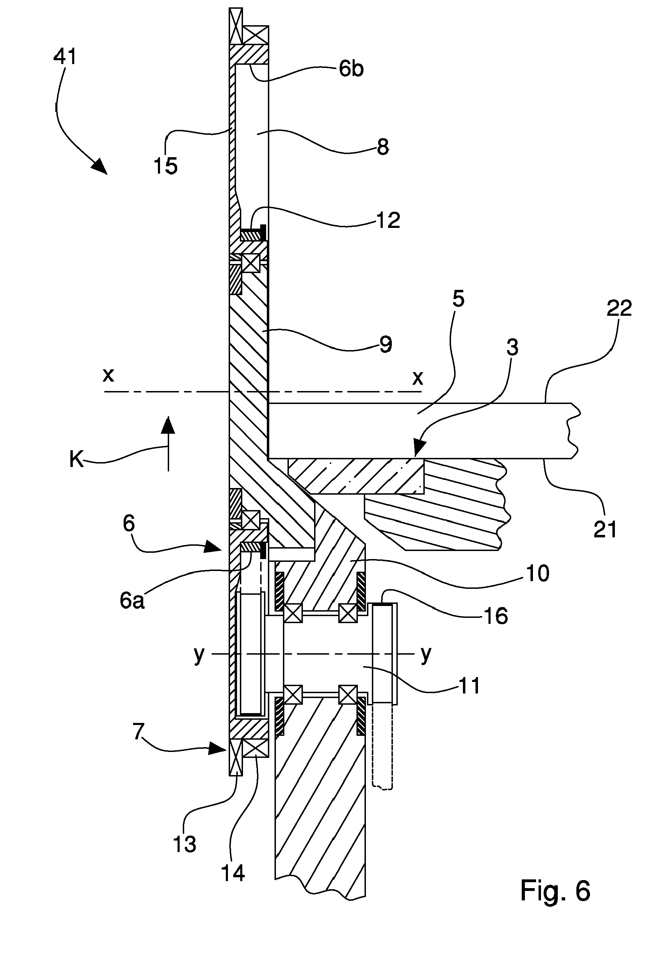

The apparatus 1 comprises a supporting plane for supporting a panel to be machined in a machining position (for example horizontal). The supporting plane, which has been schematised in figure 6 and indicated with 3, may be, for example, a supporting plane used in any known panel-cutting apparatuses to support the panel or pack of panels to be cut.

The apparatus 1 further comprises a supplying device (which is not shown) for moving the panel on the supporting plane in a supplying direction F. This supplying direction F may be, in particular, horizontal and parallel to the supporting plane 3. The supplying device may comprise, for example, a conveyor of commonly used panels or packs of panels in a panel-cutting apparatus.

The apparatus 1 may comprise other elements that are commonly used in known panel-cutting apparatuses, such as, for example, a device for locking panels in the machining position, and/or a device for orienting already cut portions in order to make further cuts that are orthogonal to the first, and/or a device for inserting workpieces to be machined and/or a device for evacuating machined workpieces, etc.

The apparatus 1 comprises a machining unit 4 that is movable in a machining direction G that is parallel to the supporting plane 3 and transverse (for example perpendicular) to the supplying direction F, to machine the panel 2 on the supporting plane 3. The machining unit 4 carries first rotating cutting means 41 (for example of the saw blade type) to perform on the panel a pre-incision parallel to the machining direction G. The machining unit 4 carries second rotating cutting means 42 (for example of the saw blade type), arranged aligned with the first cutting means 41 in the machining direction G, to perform a through separating cut along the pre-incision and separate an end portion 5 (or strip) from the panel 2.

With reference to figure 6, one embodiment of the first cutting means 41 will now be disclosed in greater detail that in the specific case comprises a disc 6 on a peripheral zone of which a circular tool 7 operates, for example of the saw type.

The disc 6 has a rotation axis x-x and the circular tool 7 is coaxial with the rotation axis x-x. The disc 6 has a central zone with an opening and an intermediate zone (interposed between the peripheral zone and the central zone) with an (annular) cavity 8 open on a side of the disc and extending (with a closed loop) around the rotation axis x-x.

The disc 6 is mounted with the possibility of rotation on supporting means having a hub portion 9 inserted into the aforesaid opening in the centre of the disc 6. The latter is rotatably coupled on the hub portion 9 around the aforesaid rotation axis x-x. The supporting means further comprises a shaft supporting portion 10 arranged facing the intermediate disc zone on the aforesaid side on which the cavity 8 is arranged.

A rotation shaft 11 is rotatably supported by the shaft supporting portion 10. The rotation shaft 11 has an end that may extend as far as the inside of the cavity 8. This end is connected to the disc 6 to rotate the disc 6, for example by a motion transmission flexible member 12 (belt).

The disc 6 has an external cylindrical surface that bounds the annular cavity 8 internally. The external cylindrical surface is coaxial with the rotation axis x-x. The end of the shaft 11 inside the cavity 8 may be connected to the external cylindrical surface, for example by the aforesaid motion transmission flexible member 12 that will be arranged inside the cavity 8.

The hub portion 9 has an axial thickness that is not greater than the maximum axial dimension of the operating part (suitable for removing material) of the circular tool 7, where axial is intended with reference to the rotation axis x-x of the tool 7.

The hub portion 9 may have, in particular, an external diameter that is greater than 20%, or 30%, or 40%, or 50%, of the external diameter of the tool 7, and/or an external diameter that is less than 90%, or 80%, or 70%, or 60% of the external diameter of the tool 7.

The hub portion 9 may have an axial thickness that is greater than 70%, or 80%, or 90%, of the maximum axial dimension of the operating part of the circular tool 7 (cutting tool), where axial is intended with reference to the rotation axis x-x.

The disc 6 may have, as in the specific example, an internal cylindrical surface that externally bounds the annular cavity 8. The internal cylindrical surface is, in particular, coaxial with the rotation axis x-x of the disc 6 and/or of the circular tool 7.

In one example which is not shown, the aforesaid end of the shaft 11 may be connected to the internal cylindrical surface of the disc 6 by a gear coupling for transmitting motion, arranged in the cavity 8, in which, for example, a crown gear is arranged on the internal cylindrical surface.

The (material removing) tool 7 may comprise, as in this specific case, a first circular blade 13, for example a first (incision-making) saw blade, and a second circular blade 14, for example a second (chip-making) saw blade. The first blade 13 and the second blade 14 may be arranged next to one another. The first blade 13 and the second blade 14 may have different diameters from one another. In particular, the first (incision-making) blade 13 will have a greater diameter than the second (chip-making) blade 14.

The supporting means of the disc may be made, as in the specific example, in two parts that are assemblable together with the possibility of adjusting the reciprocal position thereof, in particular in a radial direction. A first part may comprise the hub portion 9 and a second part may comprise the shaft supporting portion 10. This adjusting possibility can favour the coupling between the rotation shaft 11 and the disc 6 that carries the rotating tool 7.

The tool 7 may comprise a crown that is removably splined on the periphery of the disc 6. As the crown is mounted in a disassemblable manner, it can be easily dismantled and then machined on a suitable apparatus, for example for restoring the efficiency of the saw blade/s.

The rotation shaft 11 may have a shaft axis y-y parallel to the rotation axis x-x of the disc 6. The distance of the shaft axis y-y from the rotation axis x-x may be greater than half the maximum diameter of the annular cavity 8, and/or may be greater than 40%, or 50%, or 60%, of half of the external diameter of the tool 7, and/or may be less than 90%, or 80%, or 70%, of half of the external diameter of the tool 7.

The disc 6 has a front wall 15 that closes the annular cavity 8 on the side opposite the open cavity side. The disc 6 also has a first annular wall that internally radially bounds the cavity 8 and one second annular wall that externally radially bounds the cavity 8.

The shaft supporting portion 10 may, as in this case, face the open side of the cavity 8.

The rotation shaft 11 is connected, for example by a motion transmission flexible member 16, to motor means (not shown) carried by the machining unit 4 to rotate the shaft 11.

The first cutting means 41 is carried by the machining unit with the possibility of making movements, commanded by movement means (not shown), in a (vertical) direction transverse (orthogonal) to the (horizontal) supporting plane 3 of the panel 2.

In particular, the (rotating) tool 7 may be susceptible to performing movements in a direction that is transverse to the supporting plane 3 in such a manner that the rotation axis x-x of the (rotating) tool 7 may move at least between a first position in which it is on a part (below) of the (horizontal) supporting plane 3, in this case, for example, to make an incision on a first (lower) face 21 of the end portion 5 of the panel, and a second position in which it is on an opposite part (above) of the supporting plane 3, in particular above the second (upper) face 22 of the end portion 5 of the panel, opposite the first face 21, in this case, to perform a through cut in such a manner that the cut of the tool 7 (in particular the action of the biting elements of the saw tool 7) starts from this second face 22.

In use, the apparatus 1 disclosed above implements the following method for machining panels.

At least one panel 2 (or group of panels) is positioned in a machining position on the supporting plane 3. Positioning may be performed by the supplying device that conveys the panel in the supplying direction F as far as the desired position, in which the panel 2 will be locked by locking means.

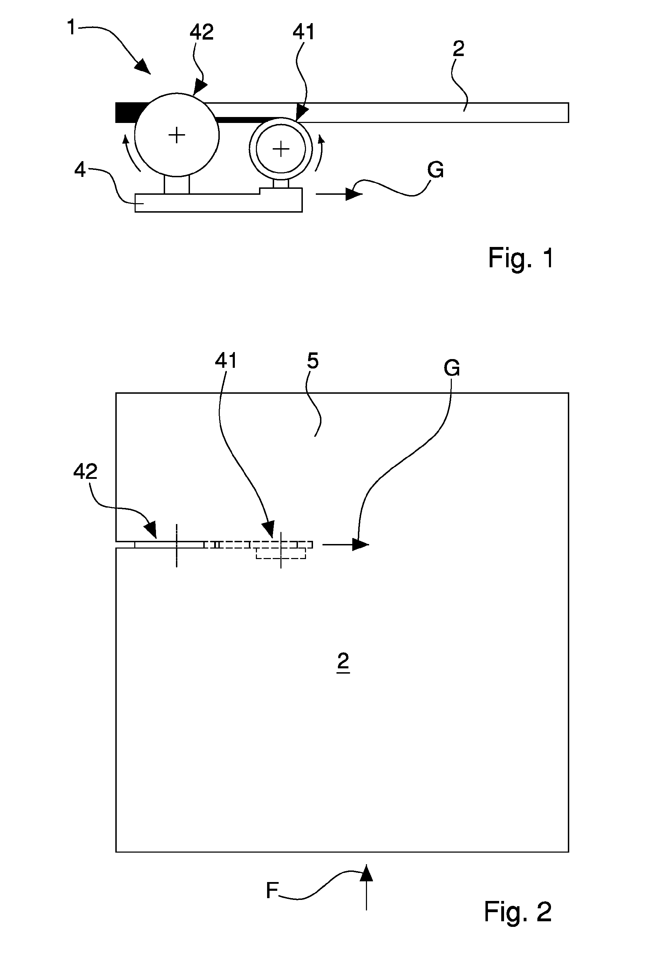

The end portion 5 is then separated from the panel in the machining position on the supporting plane by the machining unit 4, which is moved in a machining direction G and takes the first cutting means 41, which first performs the pre-incision on a (lower) face of the panel 2, and the second cutting means 42, which subsequently performs a through separating cut along the pre-incision (figures 1 and 2).

The two circular blades 13 and 14 of the tool 7, that have different diameters from one another and are arranged adjacent to one another are configured in such a manner that the tool 7 may cut, in a first step, a face of the panel by operating only with the first blade 13, with a greater diameter (whilst the second blade 14 with a smaller diameter remains at a distance from the face being machined) and may perform, in a second step, a through cut on the panel (in particular at an incision line performed previously) by operating with both blades.

The "Z-cut" is performed in the following manner.

The first cutting means 41 is positioned with the tool 7 opposite the first (lower) face 21 of the end portion 5 of the panel, in an internal zone of the face. For this purpose, after the step of separating the end portion 5 from the panel 2, the tool 7 may be moved, with at least one motion component parallel to the rotation axis x-x of the tool, to this internal zone of the first face 21, from which an incision line will depart, as will be better explained in the continuation of this description.

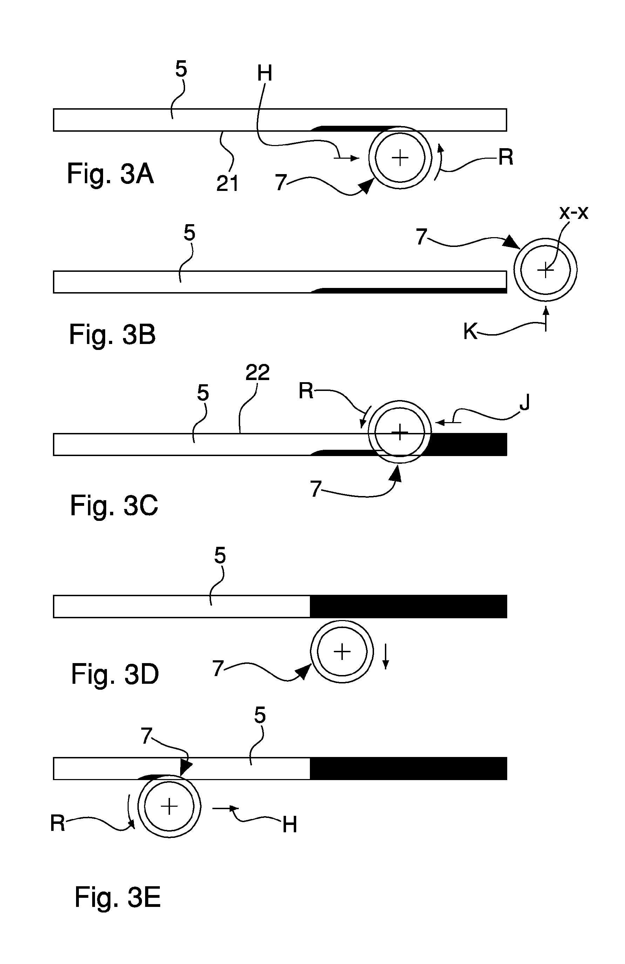

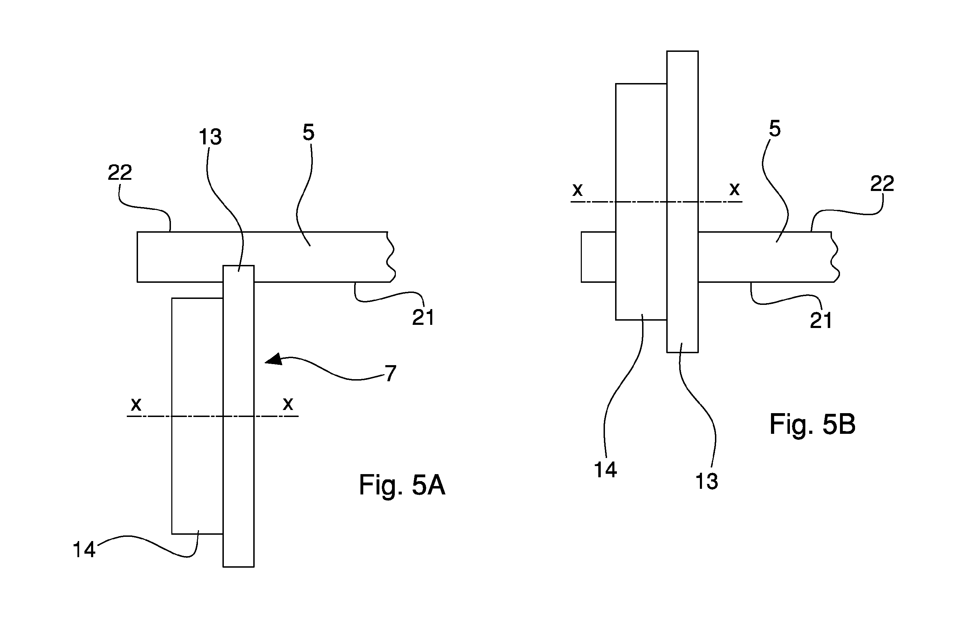

The first (lower) face 21 of the end portion 5 may be cut along at least one incision line by the same first cutting means 41 that had precut the panel 2 in operations for separating the panel 5 portions. The first cutting means 41 (comprising the tool 7) will be in particular rotated in the rotation direction R around the rotation axis x-x, in such a manner that the teeth of the tool enter the material without splintering or splitting the panel. The rotation axis x-x is at the same time moved opposite the first face 21 in a first machining direction H (figures 3A, 4A and 5A). The incision is performed starting from the aforesaid internal zone of the first face 21 as far as an end edge 5a of the face.

The rotation axis x-x of the tool 7 is then moved in a (vertical) direction K that is transverse to the (horizontal) supporting plane beyond (i.e. above in this case) the second (upper) face 22 of the end portion 5 opposite the first face 21 on which the incision (figures 3B, 4B and 5B) has been made. The rotation axis x-x of the circular tool is thus arranged above the flat (horizontal) surface of the workpiece. The tool 7 may thus enter the material to be removed in the same rotation direction R with which the tool 7 entered in the preceding incision step.

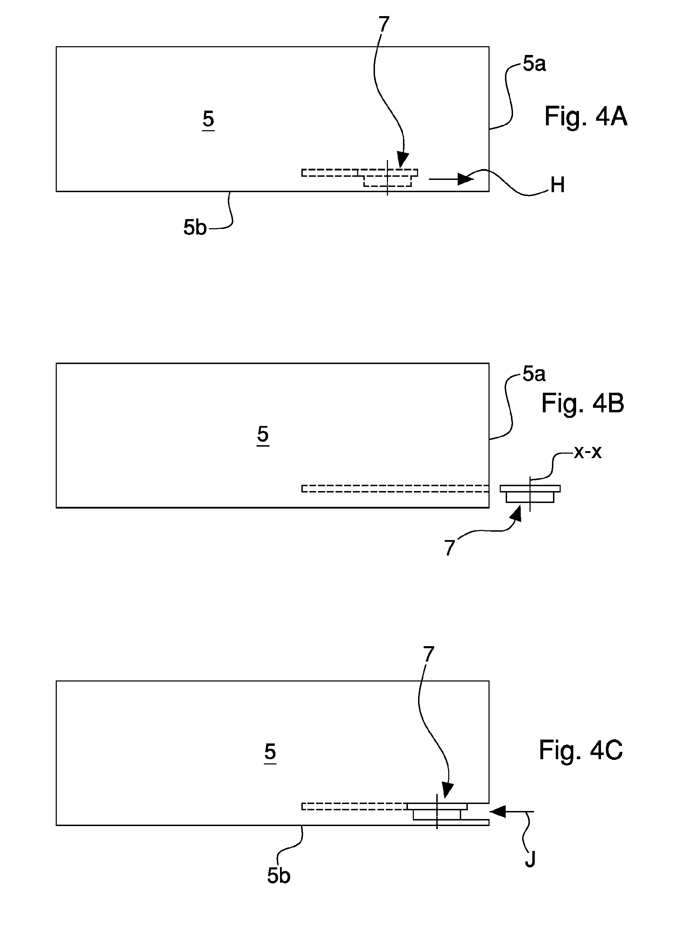

The end portion 5 is then cut with a through cut that follows the incision line, by the first cutting means 41 (having the tool 7) that is rotated in the same rotation direction R around its rotation axis, whilst the rotation axis x-x itself is moved opposite the second face 22 (figures 3C and 4C). In particular, the rotation axis x-x of the tool 7 will be moved in front of the second face 22 in a second machining direction J opposite the first machining direction H. The active circular portion of the tool 7 enters the (upper) second face 22 of the workpiece in the rotation direction R.

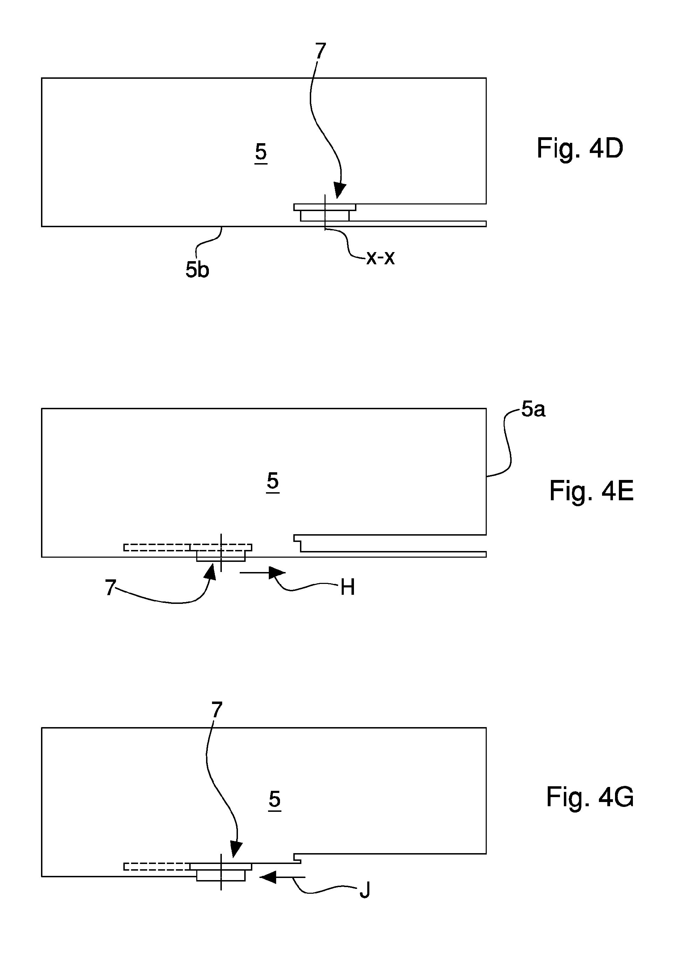

At the end of this step the tool 7 will descend to complete the (first) Z-cut (figures 3D and 4D). The end of the cutting zone that is thus obtained may have a step shape, which is due to different diameters of the circular blades 13 and 14 of the tool, but this is not important because the step is in an edge zone subsequently intended for removal to obtain the individual panel (by means of the cut that is transverse to the length of the strip).

The apparatus can be used to make two (or more) Z-cuts in the same strip of panel (or end portion 5). It is thus possible to perform the steps of making further incisions on the first face 21 of the end portion 5 along at least one second incision line (figures 3E and 4E), and to cut further with a through cut the end portion 5 along the second incision line (figure 4G).

The apparatus is controlled by a control unit that is programmed in such a manner that the second Z-cut is arranged, with respect to the first Z-cut, nearer the edge of the portion of panel from which the material is removed. This edge will hereinafter be called the chip edge 5b, in fact both the through cut made along the (first) incision line, and the through cut made along the second incision line, produce a chip that is arranged between the aforesaid incision lines and the chip edge 5b of the portion of panel. It is possible, as in this case, that the width of the active portion of the tool 7 is less than (at least) the width of the first Z-cut, so part of the material may be non-removed during this step of the Z-cut, but will be removed in at least one subsequent machining step. The incision line and the second incision line may be, as in this case, parallel to the chip edge 5b.

The apparatus is controlled by the (electronic) control unit in such a manner that the Z-cut that generates the biggest chip is performed first and ends on an edge of the panel portion adjacent to the chip edge 5b.

In the case of two, three or more Z-cuts over the same strip (end portion 5), the apparatus may be programmed to make the Z-cuts with a scaled arrangement, such that the Z-cut that generates less chip (and is thus arranged nearer the chip edge 5b) is arranged further from the aforesaid end edge 5a, adjacent to the chip edge 5b, with respect to a Z-cut that generates more chip. The various Z-cuts may in particular be parallel to one another. The apparatus may be programmed in such a manner that the Z-cut that generates less chip is performed after the Z-cut that generates more chip.

It is noted that the through cut is performed by the tool by removing material at a previously made incision line (this removal being made in particular by the same first circular blade with a greater diameter that had previously made the incision) and further by removing material at a zone devoid of an incision line (this removal in the absence of a precut zone being performed in particular by the second circular blade with a smaller diameter). The through cut performed in alignment with the incision line will on the one hand give rise to correctly cut side of the panel. Removing material where there is no precut zone cannot, on the other hand, have the same precision and correctness, but this has no importance because this more irregular removal occurs on the side of the chip edge 5b, i.e. in a zone of material intended for rejection.

The fact is emphasised that the through cut performed by the first cutting means (i.e. with the circular tool that had previously performed the incision line) occurs with the rotation axis of the tool arranged facing the face of the strip (or panel portion) opposite the face bearing the incision line. In this case the blades (of the saw type) perform the through cut correctly, maintaining the tool rotating in the same rotation direction in which it had previously rotated to make the incision line. It is further possible to terminate the Z-cut with a cut that is perfectly orthogonal to the faces of the panel.

The hub portion 9, on which the disc 6 is rotatably mounted that carries the tool 7, has a diameter that is sized so as to enable the first cutting means to move whilst the hub portion 9 traverses the gap made by the through cut and whilst the rotation axis x-x moves to a position in which it has passed the second face 22 of the panel, or panel portion. The hub portion 9 may have, for example, a diameter that is at least twice that of the thickness of the panel, or panel portion, that is being machined.

It is noted that during the various machinings disclosed above (cutting and/or incision) the reciprocal movement between the tool and the workpiece is generally provided by the movement of the tool whereas the workpiece (panel or pack of panels) remains stationary. In the context of the present invention it will obviously be possible to provide, for all the machinings disclosed above and for all the machinings claimed below, that the reciprocal workpiece-tool motion is provided by the movement of the workpiece whilst the tool remains stationary, whilst remaining within the protective scope claimed below.

## Claims

1. Cutting means comprising:
- a disc (6) having: a rotation axis (x-x); a peripheral zone bearing a circular tool (7) that is coaxial with said rotation axis (x-x); a central zone provided with an opening; and an intermediate zone arranged between said central zone and said peripheral zone and provided with a cavity (8) that is open at least on one side of the disc (6) and extends in a closed loop around said rotation axis;
- supporting means having at least one shaft supporting portion (10) arranged at least partially facing said intermediate zone of disc on said side of the disc (6), said supporting means having at least one hub portion (9) inserted into said opening, said disc (6) being rotatably coupled on said hub portion (9) around said rotation axis (x-x);
- a rotation shaft (11) rotatingly supported by said shaft supporting portion (10), said rotation shaft (11) having an end connected with said disc (6) by motion transmitting means such that said disc is rotatable by said shaft (11).

2. Cutting means according to claim 1, wherein said end is arranged in said cavity (8).

3. Cutting means according to claim 1 or 2, wherein said hub portion (9) has an axial thickness that is not greater than the maximum axial dimension of said tool (7), where axial is defined with reference to said rotation axis (x-x).

4. Cutting means according to any preceding claim, wherein said hub portion (9) has an external diameter that is greater than 20%, or 30%, or 40%, or 50%, of the external diameter of said tool (7), and/or less than 90%, or 80%, or 70%, or 60%, of the external diameter of said tool (7), and/or wherein said hub portion (9) has an axial thickness that is greater than 70%, or 80%, or 90%, of the maximum axial dimension that removes material of said tool (7), where axial is defined with reference to said rotation axis (x-x).

5. Cutting means according to any preceding claim, wherein said disc (6) has an external cylindrical surface (6a) that internally bounds said cavity (8), said external cylindrical surface being coaxial with said rotation axis (x-x), said shaft end being coupled with said external cylindrical surface (6a) by said motion transmitting means.

6. Cutting means according to claim 5, wherein said motion transmitting means comprises a flexible member (12) housed in said cavity (8) and coupled with said shaft end and with said external cylindrical surface (6a).

7. Cutting means according to any preceding claim, wherein said disc (6) has an internal cylindrical surface (6b) that externally bounds said cavity (8), said internal cylindrical surface being coaxial with said rotation axis (x-x), said shaft end being coupled with said internal cylindrical surface (6b) by said motion transmitting means.

8. Cutting means according to claim 7, wherein said motion transmitting means comprises a pair of motion transmission gears arranged in said cavity (8) to connect said shaft end to said internal cylindrical surface (6b).

9. Cutting means according to any preceding claim, wherein said tool (7) comprises a first circular blade (13), for example a first saw blade, and a second circular blade (14), for example a second saw blade, said first blade (13) and second blade (14) being arranged next to one another and having diameters that are different from one another.

10. Cutting means according to any preceding claim, wherein said supporting means comprises at least two parts, a first part that comprises said hub portion (9) and a second part that comprises said shaft supporting portion (10), that are assemblable together with the possibility of adjusting the reciprocal position thereof in a radial direction.

11. Cutting means according to any preceding claim, wherein said tool (7) comprises a crown that is connected in a removable manner on said periphery of said disc (6).

12. Cutting means according to any preceding claim, wherein said rotation shaft (11) has a shaft axis (y-y) parallel to said rotation axis (x-x) of the disc; the distance of said shaft axis (y-y) from said rotation axis (x-x) being greater than half of the maximum diameter of said opening at the centre of the disc, and/or being greater than 40%, or 50%, or 60%, than half the external diameter of said tool (7), and/or being less than 90%, or 80%, or 70%, of half of the external diameter of said tool (7).

13. Cutting means according to any preceding claim, wherein said disc (6) has a front wall (15) that closes said cavity (8) on the side opposite said open side.

14. Cutting means according to any preceding claim, wherein said shaft supporting portion (10) faces said open side.

15. Cutting means according to any preceding claim, wherein said disc (6) has a first annular wall that radially internally bounds said cavity (8) and/or wherein said disc (6) has a second annular wall that radially externally bounds said cavity (8).
